Europäisches Patentamt

European Patent Office

Office européen des brevets

(11) Veröffentlichungsnummer: **0 325 714**
**A2**

## (12) EUROPÄISCHE PATENTANMELDUNG

(21) Anmeldenummer: **88118937.7**

(22) Anmeldetag: **14.11.88**

(51) Int. Cl.⁴ **F16F 13/00 , B60G 15/06**

(30) Priorität: **26.01.88 DE 3802105**

(43) Veröffentlichungstag der Anmeldung:
**02.08.89 Patentblatt 89/31**

(84) Benannte Vertragsstaaten:
**DE ES FR GB IT NL SE**

(71) Anmelder: **Dr.Ing.h.c. F. Porsche**
**Aktiengesellschaft**
**Porschestrasse 42**
**D-7000 Stuttgart 40(DE)**

(72) Erfinder: **Zackl, Bernd, Dipl.-Ing.**
**Adlerstrasse 15**
**D-7251 Friolzheim(DE)**
Erfinder: **Trefzger, Jochen, Dipl.-Ing.**
**Im Wengert 12**
**D-7251 Weissach-Flacht(DE)**

(54) **Elastisches Lager.**

(57) Ein elastisches Lager mit hydraulischer Dämpfung, insbesondere für einen Stoßdämpfer, umfaßt mindestens zwei Arbeitsräume, die über eine mit einer Drosselöffnung versehene Trennwand unterteilt sind. Die Trennwand besteht aus einem koaxial zur Kolbenstange des Stoßdämpfers auf einer Hülse angeordnetem starren Ringsegment und einem tragenden elastischen Element. Dieses ist umfangseitig mit einem im Fahrzeug aufbaufest gehaltenem Gehäuse verbunden, das mit anschließenden Membranwänden die Arbeitsräume begrenzt.

FIG.1

EP 0 325 714 A2

## Elastisches Lager

Die Erfindung bezieht sich auf ein elastisches Lager nach dem Oberbegriff des Anspruchs 1.

Es sind elastische Lager mit hydraulischer Dämpfung bekannt, (DE-OS 31 25 907) die mindestens zwei durch eine Trennwand unterteilte Arbeitsräume aufweisen, wobei eine Verbindung der Arbeitsräume über einen Drosselkanal (DE-OS 30 24 091) erfolgt.

Aufgabe der Erfindung ist es ein elastisches Lager zu schaffen, das als aufbauseitiges Lager für einen Stoßdämpfer eines Kraftfahrzeugs ausgebildet ist, und eine kardanische Bewegung zuläßt, wobei ein Ausbau des Stoßdämpfers unabhängig vom ortsfestes Lager ermöglicht wird.

Die Aufgabe wird erfindungsgemäß durch die kennzeichnenden Merkmale des Anspruchs 1 gelöst.

Die mit der Erfindung hauptsächlich erzielten Vorteile bestehen darin, daß das Lager eine weiche Anlenkung von Bauteilen bei gleichzeitig hoher Bedämpfung von eingeleiteten Eigenschwingung ermöglicht. Die Verwendung des Lagers ist vielseitig möglich, wobei insbesondere eine Verwendung als aufbauseitiges Lager für einen Stoßdämpfer vorteilig ist, da das freie Ende des Stoßdämpfers in einer Hülse des Lagers eingesteckt gehalten ist und der Stoßdämpfer somit in einfacher Weise ohne das Lager auszubauen von diesem entfernbar und auswechselbar ist.

Das Lager kann je nach Aufbau als Zwei- oder Mehrkammerlager aufgebaut sein, wobei eine oder mehrere Eigenschwingungen bedämpfbar sind, bei gleichzeitig geringer Dämpfung der benachbarten Schwingungsbereiche. Die Lager können sowohl kardanisch weich als auch hart ausgelegt werden und erlauben entsprechend große oder kleine Winkelbewegungen bzw. eine Beeinflussung der kardanischen Rückstellmomente. Die Radialkennung ist durch den Aufbau und die Gummimischung variierbar und bei entsprechendem Aufbau bedämpfbar.

Werden die die Dämpfung erzeugenden Drosselkanäle mit geeigneten und von außen steuerbaren Verstellmöglichkeiten versehen, ist es auch möglich die Dämpfung der Lager von außen wirksam zu beeinflussen.

Ausführungsbeispiele der Erfindung sind in der Zeichnung dargestellt und werden im folgenden näher beschrieben.

Es zeigen:

Fig. 1 eine Ansicht des elastischen Lagers im Schnitt mit einem außen umschließenden Gehäuse und innenliegenden Membranwandungen,

Fig. 2 ein weiteres Ausführungsbeipiel eines elastischen Lagers im Schnitt mit einem dritten Raum,

Fig. 3 eine weitere Ausführung eines elastisches Lager im Schnitt mit außenliegenden tragendem Membranwandungen,

Fig. 4 eine Ausführung eines elastsichen Lagers im Schnitt gemäß Fig. 3 mit einer Abstützung einer Schraubenfeder am tragenden als Membranwand ausgebildeten elastischen Element.

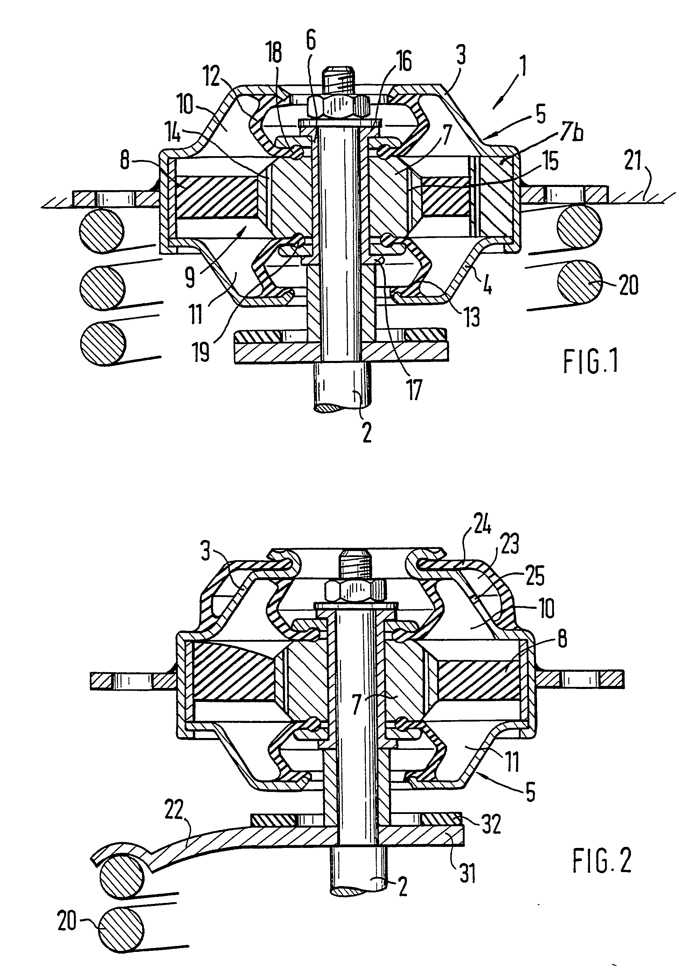

Das Lager 1 für einen Stoßdämpfer gemäß den Figuren 1 und 2 umfaßt ein mindestens aus zwei Schalen 3 und 4 zusammengesetztes Gehäuse 5, das den Lagerkern nahe der Kolbenstange 2 halbkreisförmig umschließt. Mit dem Gehäuse 5 sind z.B. Flansche verbunden, die aufbauseitig am Fahrzeug befestigbar sind.

Das freie Ende 34 der Kolbenstange 2 ist in einer Hülse 6 gelagert, auf der koaxial ein Ringsegment 7 gehalten ist, das mit einem tragenden elastischen Element 8 eine Trennwand 9 für zwei Arbeitsräume 10 und 11 bildet. Über Membranwände 12, 13 zwischen dem Gehäuse 5 und der Hülse 6 sind die beiden Räume 10 und 11 dicht abgeschlossen. Zwischen diesen Räumen 10 und 11 ist über Drosselbohrungen 14 und 15 im Ringsegment 7 eine Verbindung hergestellt. Nach einer Ausführung gemäß Fig. 1 (rechte Darstellung) kann das elastische Element 8 zwischen dem Ringsegment 7 und einem äußeren sich am Gehäuse abstützenden weiteren Segment 7b gehalten werden. In diesem Segment 7b sind dann die Drosselbohrungen angeordnet.

Das Ringsegment 7 ist nach den Figuren 1 und 2 zwischen eingerollten Flanschen 16 und 17 bzw. zwischen Scheiben, die sich an den Flanschen abstützen, eingespannt, wobei zwischen den Scheiben und der Stirnfläche des Segments 7 die innenliegenden Wulstränder 18, 19 der beiden Membranwände 12 und 13 dichtend eingespannt sind.

Wie in Fig. 1 näher angedeutet ist, kann sich eine Schraubenfeder 10 am Fahrzeugaufbau 21 oder z.B. an einem Teller 22 abstützen, der mit der Kolbenstange 2 verbunden ist wie beispielsweise in Fig. 2 andeutungsweise dargestellt wurde. Im letzteren Fall ist die Membran als tragendes Bauteil auszulegen.

Nach einer Ausführung gemäß Fig. 2 (linke Darstellung) stützt sich das elastisch tragende Element 8 axial am Gehäuse 5 ab und weist hierzu eine entsprechende elastische Anformung auf.

In der Ausführung nach Figur 2 ist außenseitig des Gehäuses 5 ein weiterer Raum 23 vorgesehen, der von einer im Querschnitt halbkreisförmig gebogenen Membranwand 24 gebildet wird, die mit der einen Schale 3 des Gehäuses 5 verbunden ist. Dieser zusätzliche Raum 23 ist dem Raum 10 zugeordnet, wobei eine Verbindung zwischen diesen Räumen 10 und 23 über eine Drosselbohrung 25 in der Schale 3 erfolgt.

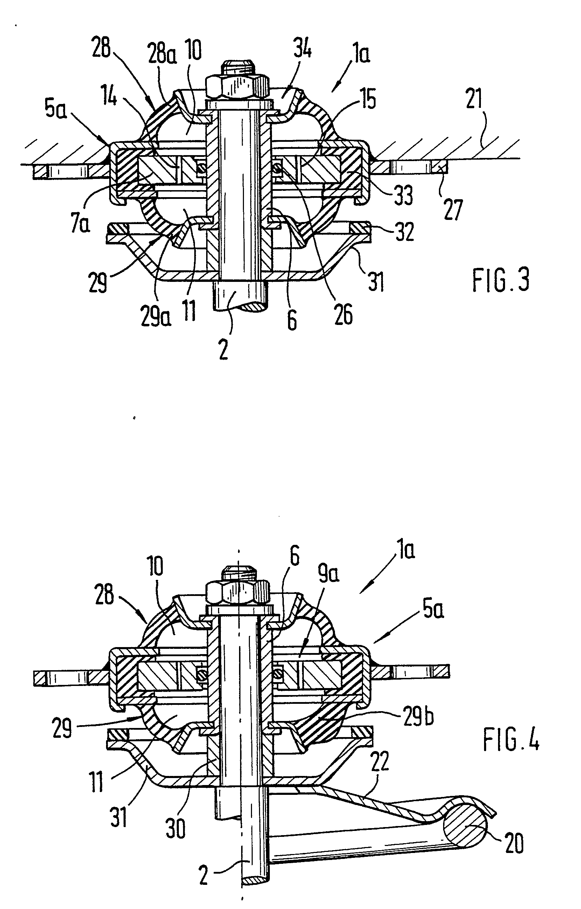

Nach einer weiteren Ausführung des Lagers 1a, gemäß den Figuren 3 und 4, ist die Kolbenstange 2 in der Hülse 6 gelagert, auf der ein Ringsegment 7a unter Zwischenschaltung eines Dichtringes 26 gehalten ist. Dieser Dichtring 26 soll bei einer Bewegung der Kolbenstange 2 relativ zum Segment 7a ein leichtes Verschieben bei gleichzeitiger Dichtheit gewährleisten. Mit dem Segment 7a ist ein elastisches Element 33 verbunden, das zwischen gegenüberliegenden Schenkel eines im Querschnitt U-förmigen Gehäuses 5a gehalten ist. Mit diesem sind abgestellte Flansche 27 verbunden, die zum Befestigen am Fahrzeugaufbau 21 dienen.

An dem Gehäuse 5a sind zum Abschluß der Räume 10 und 11 außenliegende Membranwände 28a, 29a befestigt, die gleichzeitig zum Tragen der Last ausgeführt sind. Sie erstrecken sich zur Hülse 6 und sind mit dieser verbunden. Eine Trennung der Räume 10 und 11 erfolgt über das Segment 7a und das elastische Element 33, wobei über Drosselbohrungen 14, 15 im Segment 7a eine Verbindung zwischen den Räumen 10 und 11 besteht.

Wie in Fig. 4 näher dargestellt ist, ist eine Schraubenfeder 20 an einem Federteller 22 gehalten der über eine Zwischenhülse 30 an der Hülse 6 axial abgestützt ist. Zur Angleichung an die höheren statischen Lasten können die tragenden elastischen Wänder 28a, 29a der Membran stärker ausgeführt werden, wie die Ausführung der Wand 29b wie Fig. 4 näher zeigt. Mit der Kolbenstange 2 sind Teller 31 verbunden, die am Außenrand eine in Axialrichtung wirkenden Anschlagring 32 aufweisen.

## Ansprüche

1. Elastisches Lager mit hydraulischer Dämpfung, insbesondere für einen Stoßdämpfer, das mindestens zwei Arbeitsräume umfaßt, die über eine mit einer Drosselöffnung versehene Trennwand unterteilt sind, dadurch gekennzeichnet, daß die Trennwand (9; 9a) aus einem koaxial zur Kolbenstange (2) des Stoßdämpfers auf einer Hülse (6) angeordnetem starren Ringsegment (7; 7a) und einem tragenden elastischen Element (8; 28, 29) besteht, des umfangseitig mit einem im Fahrzeug aufbaufest gehaltenem Gehäuse (5; 5a) verbunden ist, das mit anschließenden Membranwänden (12, 13; 28a, 29a) die Arbeitsräume (10, 11) begrenzt.

2. Lager nach Anspruch 1, dadurch gekennzeichnet, daß das Gehäuse (5) mindestens zwei miteinander verbundenen Schalen (3, 4) umfaßt, das den Lagerkern bis nahe der Hülse (6) umschließt und äußere Wände für die beiden Arbeitsräume (10, 11) bildet die mit inneren Membranwänden (12, 13) die Arbeitsräume (10, 11) begrenzen.

3. Lager nach den Ansprüchen 1 oder 2, dadurch gekennzeichnet, daß das Ringsegment (7) sowie innere Wulstränder (18, 19) der Membranwände (12, 13) zwischen Flansche (16, 17) der Hülse (6) fest eingespannt gehalten sind.

4. Lager nach den Ansprüchen 1 oder 2, dadurch gekennzeichnet, daß das Gehäuse (5a) des Lagers (1a) die Trennwand (9a) unter Zwischenschaltung eines elastischen Elements (33) endseitig umschließt und mit dem Gehäuse (5a) die Arbeitsräume (10, 11) von außen abschließende tragende elastische Membranwände (28a, 29a; 29b) umfaßt.

5. Lager nach einem oder mehreren der vorhergehenden Ansprüche, dadurch gekennzeichnet, daß das Ringsegment (7a) des Lagers (1a) unter Zwischenschaltung eines Dichtringes (26) auf der Hülse (6) im Gehäuse (5a) gehalten ist und die Hülse (6) relativ verschieblich zum Segment (7a) angeordnet ist.

6. Lager nach einem oder mehreren der vorhergehenden Ansprüche, dadurch gekennzeichnet, daß im Ringsegment (7a; 7b) die Drosselbohrungen (14, 15) angeordnet sind.

7. Lager nach einem oder mehreren der vorhergehenden Ansprüche, dadurch gekennzeichnet, daß einer der beiden vom Gehäuse (5) und den Membranwänden (12, 13) unschlossenen Arbeitsräume (10, 11) mit einem weiteren Raum (23) über eine Drosselbohrung (25) verbunden ist.

8. Lager nach einem oder mehreren der vorhergehenden Ansprüche, dadurch gekennzeichnet, daß das in der Hülse (6) festgesetzte freie Ende (34) der Kolbenstange (2) des Stoßdämpfers vom ortsfest verbleibenden Lager (1; 1a) lösbar gelagert ist.

AC 49₁

FIG.1

FIG.2

AC 49 2

FIG.3

FIG.4